# FASCICULE DE BREVET EUROPEEN

(11) **EP 2 974 964 B1**
(45) Date de publication et mention de la délivrance du brevet: **24.08.2016**
(21) Numéro de dépôt: 15175225.0
(22) Date de dépôt: 03.07.2015
(51) Int. Cl.: B64D 27/10, B64D 27/24, B64D 31/14, B64D 35/02, B64D 35/08

(54) **ARCHITECTURE ÉLECTRIQUE POUR UN AÉRONEF, AÉRONEF ET PROCÉDÉ DE MISE EN OEUVRE**
ELEKTRISCHER AUFBAU FÜR EIN LUFTFAHRZEUG, LUFTFAHRZEUG UND ANWENDUNGSVERFAHREN
ELECTRICAL ARCHITECTURE FOR AN AIRCRAFT, AIRCRAFT AND METHOD OF IMPLEMENTATION

(30) Priorité: 17.07.2014 FR 1401593
(43) Date de publication de la demande: 20.01.2016
(73) Titulaire: Airbus Helicopters, 13725 Marignane Cedex (FR)
(72) Inventeur: Sautreuil, Matthieu, 13300 Salon de Provence (FR); Bezes, Gilles, 13680 Lancon de Provence (FR)
(74) Mandataire: GPI & Associés

(56) Documents cités:
- EP-A1- 2 327 625
- EP-A1- 2 684 798
- EP-A2- 2 404 775
- EP-A2- 2 703 292
- WO-A1-2014/022316
- FR-A1- 2 961 767

## Description

La présente invention concerne une architecture électrique pour un aéronef, un aéronef et un procédé mis en oeuvre par cette architecture électrique.

La présente invention est donc du domaine des aéronefs, et notamment des aéronefs comprenant une voilure tournante. Plus particulièrement, l'invention concerne les aéronefs ayant une motorisation dite « hybride » pour entraîner en rotation au moins un rotor d'une voilure tournante par l'intermédiaire d'une boîte de transmission de puissance principale de cet aéronef. Une telle boîte de transmission de puissance principale est plus simplement dénommée par la suite « boîte de transmission de puissance ».

Une motorisation « hybride » désigne une installation comprenant au moins un moteur thermique et au moins un organe électrique pour mettre en mouvement une boîte de transmission de puissance ou pour transmettre de la puissance au moteur thermique pendant des phases transitoires de puissance moteur.

L'organe électrique peut être un moteur électrique, à savoir un appareil électrique remplissant une fonction motrice uniquement.

Cependant, cet organe électrique peut aussi être une machine électrique, à savoir un appareil électrique remplissant une fonction motrice et une fonction « générateur d'électricité ». Une machine électrique peut donc fonctionner soit selon un mode « moteur électrique » pour entraîner en rotation des organes mécaniques, soit selon un mode « générateur électrique » pour générer de l'énergie électrique. Une machine électrique est parfois qualifiée de « réversible » dans la mesure où la machine électrique peut basculer du mode « moteur électrique » vers le mode « générateur électrique » et inversement.

Un générateur électrique est un appareil électrique remplissant uniquement une fonction générateur d'électricité.

On regroupe alors sous l'appellation « organe électrique » un moteur électrique, une machine électrique et un générateur électrique.

En outre, un aéronef à voilure tournante peut comporter un ou plusieurs rotors de sustentation voire de propulsion dits « rotors principaux ». cet aéronef à voilure tournante peut comporter un ou plusieurs rotors auxiliaires pour le contrôle du mouvement en lacet de l'aéronef par exemple.

L'installation motrice comporte classiquement alors au moins un moteur thermique mettant en rotation les rotors principaux par le biais de la boîte de transmission de puissance.

Ce moteur thermique peut coopérer avec une machine électrique. Cette machine électrique fonctionne alors en mode « moteur électrique » au démarrage de l'aéronef pour démarrer le moteur thermique.

Par exemple, le moteur thermique peut être un turbomoteur muni d'un générateur de gaz. La première machine électrique met alors en rotation le générateur de gaz au démarrage.

Lorsque le moteur thermique est démarré, la première machine électrique peut alors fonctionner en mode « générateur électrique » pour alimenter en énergie électrique le réseau de bord de l'aéronef.

La machine électrique transforme alors de l'énergie électrique en énergie mécanique pour démarrer le moteur thermique selon une première fonction, et transforme de l'énergie mécanique provenant du moteur thermique en une énergie électrique destinée au réseau de bord selon une deuxième fonction.

Le document FR 2993243 décrit une architecture d'alimentation hybride en puissance mécanique d'un rotor, gérée à partir du réseau de bord d'un giravion.

Selon ce document FR 2993243, la machine électrique reliée à un moteur thermique peut assister en vol ce moteur thermique. Une telle assistance est procurée par un apport d'énergie mécanique au moteur thermique depuis la machine électrique.

Par ailleurs, les giravions intègrent de plus en plus de fonctions électriques pour remplacer des systèmes hydrauliques, par exemple pour remplir de nouvelles fonctions. En effet, un constructeur tend à utiliser des organes électriques compte tenu de la flexibilité offerte par l'énergie électrique en termes de conversion ou de transformation. De plus, l'énergie électrique est disponible à bord de l'aéronef via des générateurs ou des batteries en vol, ou via des batteries et des prises de parc électriques au sol.

Cependant, les divers organes électriques d'un aéronef ont des besoins différents, et sont contrôlés de manière différente.

Certains organes électriques fonctionnent à l'aide d'un courant électrique continu à basse tension, ou d'un courant électrique continu à haute tension ou encore d'un courant électrique alternatif à haute tension. Par exemple, le courant électrique continu peut circuler à une basse tension de l'ordre de 28 Vdc. Par contre, le courant électrique continu peut circuler à une haute tension de l'ordre de 270 Vdc, le courant électrique alternatif pouvant circuler dans un système de tension triphasé avec une tension de phase de 115Vac et fréquence de 400Hz.

Une tension supérieure à 60 Volts peut alors être qualifiée de haute tension par opposition à une tension inférieure à 60 Volts, qualifiée de basse tension.

In outre, certains organes électriques produisent de l'énergie électrique alors que d'autres organes consomment de l'énergie électrique.

Dès lors, un constructeur tend à prévoir un convertisseur électrique en amont de chaque organe électrique pour adapter les caractéristiques du réseau électrique au fonctionnement de cet organe.

En dehors des phases de fonctionnement de l'organe électrique, ces convertisseurs représentent une masse embarquée morte qui affecte négativement le bilan de masse de l'aéronef.

La présente invention a pour objet une architecture tendant à minimiser ce problème.

L'arrière plan technologique inclut notamment les documents CN102201744, EP2122271, EP-911515, IN2010MU03358, JP2011004507, US6954366, US7050312, US20080123375, US20100165673, US20130039104, US20130039104, WO2012137210, US 7923865, EP2404775, FR2961767, EP2703292, Ep2327625 et WO2014/022316.

L'invention concerne une architecture électrique d'un aéronef comprenant un ensemble de transmission de puissance relié au moins à un rotor de sustentation et entraîné par au moins un moteur thermique, cette architecture électrique comprenant un réseau électrique à haute tension incluant une machine électrique principale destinée à être reliée à ce moteur thermique et une machine électrique secondaire destinée à être reliée à l'ensemble de transmission de puissance.

Ce réseau électrique à haute tension comporte au moins un coeur électrique à haute tension relié à au moins une source électrique. Le coeur électrique à haute tension est relié par une première ligne et par une deuxième ligne à un convertisseur multifonction, ce coeur électrique à haute tension comportant une première liaison reliant la première ligne à ladite machine électrique secondaire, le coeur électrique à haute tension comportant une deuxième liaison reliant la deuxième ligne à au moins ladite machine électrique principale et ladite machine électrique secondaire.

Par exemple, le réseau électrique à haute tension comporte au moins un coeur électrique à haute tension par moteur thermique.

Le convertisseur multifonction comporte un bus à courant continu haute tension relié à un onduleur bidirectionnel. Cet onduleur bidirectionnel est relié à la deuxième ligne.

De plus, le bus à courant continu haute tension communique électriquement avec la première ligne.

Le convertisseur multifonction comprend en outre un superviseur relié à un système avionique ainsi qu'à un système de contrôle contrôlant le moteur thermique et à un contrôleur du coeur électrique à haute tension pour alimenter électriquement au moins une machine électrique et/ou pour prélever de l'énergie électrique via le convertisseur multifonction à partir d'au moins une desdites machines électriques en fonction de phases de fonctionnement déterminées à partir dudit système avionique et dudit système de contrôle.

Le superviseur et le contrôleur sont d'un type connu et utilisés de manière particulière. Ainsi, le superviseur pilote la régulation de couple / vitesse des organes électriques. Ce superviseur détermine en effet les caractéristiques électriques à fournir en fonction de l'ordre reçu. Le contrôleur communique au superviseur la configuration du réseau électrique et les fonctions à entreprendre. Selon une variante, les fonctions à entreprendre sont déterminées par le superviseur du convertisseur multifonction et non pas par le contrôleur.

Pour mémoire, on qualifie par « haute tension » un équipement parcouru par un courant électrique à haute tension, de l'ordre d'au moins 60 Volts par exemple. Le réseau électrique à haute tension est par exemple un réseau alimenté par une tension 115Vac/200Vac-400Hz ou de 270Vdc ou de 330 Vdc, dont la configuration et la protection sont gérées par les coeurs électriques haute tension.

A l'inverse, on qualifie par « basse tension » un équipement parcouru par un courant électrique à basse tension, de l'ordre de 28 Volts par exemple

Ce convertisseur multifonction est ainsi relié à un coeur électrique à haute tension, ce coeur électrique à haute tension étant lui-même relié à une pluralité d'organes électriques.. Ces organes électriques peuvent être une machine électrique, un moteur électrique ou encore un générateur électrique.

Dès lors, cette architecture permet d'utiliser un unique convertisseur multifonction par moteur thermique qui communique électriquement avec une pluralité d'organes électriques.

Cette architecture permet suivant ses variantes de fournir de la puissance électrique, via un seul convertisseur multifonction judicieusement intégré dans le réseau électrique de l'aéronef :
- au sol, à une boîte à accessoires,
- à la machine électrique principale pour démarrer un moteur thermique à partir de diverses sources électriques
- à la machine électrique principale pour assister le moteur thermique dans le cadre d'une propulsion hybride,
- à un réseau électrique à basse tension,
- à un réseau électrique à haute tension.

Cette simplification tend à optimiser la masse de l'architecture électrique de l'aéronef.

En outre, cette architecture permet d'entraîner une boîte à accessoires de l'ensemble de transmission par la machine électrique secondaire.

Ainsi, la machine électrique secondaire peut permettre au sol le fonctionnement d'accessoires hydrauliques et pneumatiques en puisant de l'énergie électrique. Cette architecture permet ainsi d'éviter une électrification partielle de certains accessoires.

L'architecture peut de plus comporter une ou plusieurs des caractéristiques qui suivent.

Ainsi, le bus à courant continu haute tension peut être relié directement à la première ligne. Dans ce cas, la source électrique peut générer une haute tension de 270 Vdc par exemple. On rappelle que l'acronyme Vdc fait référence à l'expression Anglaise « Volt Direct Courant »

Néanmoins, cette source électrique peut aussi générer un système de haute tension triphasé, avec une tension de phase de 115Vac ou 230Vac par exemple.

Dès lors, le bus à courant continu haute tension communique électriquement avec la première ligne en étant relié à un convertisseur courant alternatif haute tension/courant continu haute tension, ce convertisseur courant alternatif haute tension/courant continu haute tension étant relié à la première ligne.

Le convertisseur courant alternatif haute tension/courant continu haute tension représente alors un étage de redressement d'entrée du convertisseur multifonction.

Par ailleurs, la source électrique peut comporter une prise de parc à haute tension alimentant électriquement un coeur électrique à haute tension.

Cette prise de parc à haute tension peut permettre de brancher l'architecture électrique à un moyen d'alimentation électrique à haute tension.

En outre, l'architecture peut comporter au moins un moteur électrique alimenté électriquement par la deuxième ligne au travers du coeur électrique à haute tension.

Le moteur électrique peut être le moteur d'un compresseur d'un système de climatisation ou d'une pompe hydraulique par exemple.

Ce moteur peut être utilisé lorsque le convertisseur multifonction n'est pas sollicité par ailleurs. En particulier, le moteur électrique peut au sol servir à alimenter la fonction climatisation, puis servir au démarrage d'un moteur thermique, puis alimenter à nouveau la fonction climatisation une fois le démarrage terminé.

Selon une réalisation, l'architecture comporte deux moteurs thermiques, chaque moteur thermique étant relié à un convertisseur multifonction par un coeur électrique à haute tension, les coeurs électriques haute tension étant reliés entre eux, au moins un coeur électrique à haute tension étant relié à une prise de parc.

Par suite, chaque moteur thermique fait partie d'un sous-ensemble à haute tension comportant un coeur électrique à haute tension et un convertisseur multifonction.

Au moins un des coeurs électriques à haute tension est alors relié à une prise de parc à haute tension.

Par ailleurs, l'architecture peut comporter au moins un équipement électrique fonctionnant avec un courant alternatif à haute tension relié à un coeur électrique à haute tension.

En outre, cette architecture peut comporter un réseau électrique à basse tension relié à chaque coeur électrique à haute tension par un convertisseur courant alternatif haute tension/courant continu basse tension, la source électrique alimentant le réseau électrique haute tension comportant au moins une batterie reliée audit convertisseur courant alternatif haute tension/courant continu basse tension via un coeur électrique à basse tension.

L'aéronef comprend alors un réseau électrique à basse tension par exemple à 28 Vdc, géré par des coeurs électriques basse tension sur lesquels sont raccordées une ou plusieurs batteries.

Selon une variante alternative, le réseau électrique à basse tension est dépourvu de batterie.

Lors de l'utilisation de la machine électrique principale pour assister le moteur thermique en vol, certaines architectures tendent alors à induire des coupures électriques sur le réseau électrique à basse tension.

Le convertisseur multifonction permet néanmoins d'alimenter en parallèle la machine électrique principale et le réseau électrique à basse tension, par exemple à l'aide d'une énergie électrique générée par la machine électrique secondaire.

Ainsi, l'architecture peut comporter un réseau électrique à basse tension relié à chaque coeur électrique à haute tension par un convertisseur courant alternatif haute tension/courant continu basse tension, ladite source électrique comportant au moins une prise de parc à basse tension reliée à un coeur électrique à basse tension dudit réseau électrique à basse tension.

Par ailleurs, le convertisseur multifonction peut comporter un convertisseur haute tension continue/basse tension continue relié à un réseau électrique à basse tension et audit bus à courant continu haute tension.

Par suite, le convertisseur multifonction peut comporter trois moyens de conversion électrique susceptibles de fonctionner conjointement, à savoir un onduleur bidirectionnel, un convertisseur courant alternatif haute tension/courant continu haute tension et le convertisseur haute tension continue/basse tension continue,

Outre une architecture électrique, l'invention vise un aéronef comprenant un ensemble de transmission de puissance relié au moins à un rotor de sustentation et entraîné par au moins un moteur thermique. Cet aéronef comporte une telle architecture électrique. Le rotor de sustentation peut aussi participer au moins partiellement à la propulsion de l'aéronef.

Par ailleurs, l'ensemble de transmission comportant éventuellement une boîte de transmission de puissance entraînée par chaque moteur thermique, la machine électrique secondaire peut être reliée à la boîte de transmission de puissance.

Cette machine électrique secondaire peut alors participer à l'entraînement de la boîte de transmission de puissance pour participer à l'entraînement du rotor de sustentation. L'énergie électrique nécessaire peut provenir d'une source dédiée au fonctionnement de la machine électrique secondaire durant une telle phase de fonctionnement.

De plus, la machine électrique secondaire peut générer de l'énergie électrique en étant entraînée par la boîte de transmission de puissance.

En outre, l'ensemble de transmission comportant éventuellement une boîte de transmission de puissance entraînée par chaque moteur thermique, cette boîte de transmission de puissance entraînant une boîte à accessoires, la machine électrique secondaire est reliée à la boîte à accessoires.

Cette machine électrique secondaire peut alors permettre le fonctionnement d'accessoires en entraînant la boîte à accessoires.

De plus, la machine électrique secondaire peut générer de l'énergie électrique en étant entraînée par la boîte à accessoires.

Par ailleurs, l'ensemble de transmission comportant une boîte de transmission de puissance entraînée par chaque moteur thermique, ladite boîte de transmission de puissance entraînant une boîte à accessoires, ladite architecture comporte un moteur auxiliaire entraînant ladite boîte à accessoires.

Ce moteur auxiliaire peut être un moteur connu sous l'acronyme APU soit « Auxiliary Power Unit » en langue anglaise.

Le moteur auxiliaire fournit de la puissance mécanique à la boîte à accessoires, voire à la boîte de transmission de puissance.

Le moteur auxiliaire peut entraîner la machine électrique secondaire via la boite à accessoires, la machine électrique secondaire générant alors de l'énergie électrique pour représenter une source électrique à haute tension.

De plus, l'invention vise un procédé d'utilisation de cet aéronef. Selon ce procédé,
- durant une étape de démarrage dudit moteur thermique effectué durant une phase de fonctionnement au sol, on prélève de l'énergie électrique sur ladite source électrique puis on achemine cette énergie électrique dans ledit réseau électrique à haute tension vers ledit convertisseur multifonction, une deuxième ligne puis ledit coeur électrique à haute tension, ladite machine électrique principale fonctionnant en mode moteur pour démarrer ledit moteur thermique,
- durant une étape de démarrage de génération électrique, on génère de l'énergie électrique avec ladite machine électrique principale fonctionnant en mode générateur électrique, et on transfère ladite énergie électrique audit convertisseur multifonction successivement via un coeur électrique à haute tension et une deuxième ligne, par exemple pour alimenter des équipements de l'aéronef ou pour démarrer un autre moteur thermique,
- en vol et durant une phase d'hybridation, on prélève de l'énergie électrique sur ladite source électrique puis on achemine cette énergie électrique dans ledit réseau électrique à haute tension vers ledit convertisseur multifonction, une deuxième ligne puis ledit coeur électrique à haute tension, ladite machine électrique principale fonctionnant en mode moteur.

L'étape de démarrage est dénommée par commodité « deuxième étape » par la suite. En effet, le procédé peut permettre la mise en oeuvre d'une première étape au sol n'impliquant pas le moteur thermique.

Ainsi, le superviseur détermine via le système de contrôle du moteur thermique que ce moteur thermique est à l'arrêt complet par exemple. Si un ordre de démarrage est transmis, le superviseur communique avec le contrôleur pour que l'énergie électrique prélevée soit dirigée vers la machine électrique principale pour la faire fonctionner en mode moteur. Le superviseur contrôle alors l'onduleur pour piloter la machine électrique principale de la manière requise. En outre, le contrôleur contrôle des interrupteurs du coeur électrique à haute tension pour alimenter la machine électrique principale.

A partir d'un certain stade, le moteur thermique est démarré. Si nécessaire, le superviseur entame une étape de génération électrique dite « troisième étape ».

Par exemple, le superviseur détermine que le moteur thermique comporte un générateur de gaz ayant atteint un seuil de vitesse de rotation. Le superviseur en déduit que le moteur thermique est démarré.

Dès lors, le superviseur communique avec le contrôleur pour recevoir si nécessaire une énergie électrique à l'aide de la machine électrique principale fonctionnant en mode générateur électrique.

Cette énergie électrique est par exemple transmise à un réseau électrique à basse tension et/ ou à des équipements du réseau électrique haute tension.

Par ailleurs, le moteur thermique peut être assisté par la machine électrique principale en vol durant une phase d'hybridation.

Un constructeur détermine alors des paramètres avioniques à comparer à des seuils.

Le superviseur effectue ainsi une comparaison pour entamer le cas échéant une phase d'hybridation dite « quatrième étape ».

Durant cette quatrième étape, le superviseur communique avec le contrôleur pour que l'énergie électrique prélevée soit dirigée vers la machine électrique principale pour la faire fonctionner en mode moteur.

Ce procédé peut aussi comporter une ou plusieurs des caractéristiques qui suivent.

Durant une phase de fonctionnement au sol dite « première étape », on prélève de l'énergie électrique sur ladite source électrique puis on achemine cette énergie électrique dans ledit réseau électrique à haute tension vers la machine électrique secondaire successivement via au moins un coeur électrique à haute tension, une première ligne, un convertisseur multifonction, une deuxième ligne puis ledit coeur électrique à haute tension, la machine électrique secondaire fonctionnant en mode moteur pour entraîner au moins partiellement ledit ensemble de transmission.

Plus particulièrement, la machine électrique secondaire peut permettre le fonctionnement d'équipements au sol, et notamment d'équipements reliés à une boîte à accessoires.

En outre, durant une phase de fonctionnement au sol, on peut prélever de l'énergie électrique sur ladite source électrique puis on achemine cette énergie électrique vers un réseau électrique à basse tension successivement via au moins un coeur électrique à haute tension, une première ligne et ledit convertisseur multifonction.

Quelle que soit l'étape de fonctionnement, on peut prélever de l'énergie électrique sur ladite source électrique en prélevant de l'énergie électrique sur une prise de parc à haute tension alimentant au moins un coeur électrique à haute tension.

Selon une variante, on peut prélever de l'énergie électrique sur ladite source électrique en :
- entraînant une boîte à accessoires dudit ensemble de transmission de puissance via un moteur auxiliaire,
- en générant de l'énergie électrique à partir d'une machine électrique secondaire en prise sur ladite boîte à accessoire pour requérir le fonctionnement de ladite machine électrique secondaire en mode générateur électrique, ladite machine électrique secondaire représentant ladite source électrique alimentant électriquement au moins un coeur électrique à haute tension.

Selon une variante, on prélève de l'énergie électrique sur ladite source électrique en prélevant de l'énergie électrique à partir d'une source électrique basse tension d'un réseau électrique à basse tension, et en transférant cette énergie électrique audit convertisseur multifonction.

Par exemple, le démarrage d'un moteur électrique peut exiger une puissance électrique importante.

Dès lors, la deuxième étape est favorablement réalisée en utilisant une source d'énergie du réseau électrique haute tension, à savoir une prise de parc à haute tension, ou la machine électrique secondaire.

Toutefois, l'énergie électrique peut être prélevée sur le réseau électrique à basse tension et convertie par le convertisseur multifonction.

Cette énergie électrique peut aussi être prélevée sur le réseau électrique à basse tension, convertie par un convertisseur du réseau électrique à basse tension puis transmise au convertisseur multifonction par un coeur électrique à haute tension.

En effet, l'énergie électrique peut être acheminée vers un convertisseur multifonction via au moins un coeur électrique à haute tension puis une première ligne.

Dans ce mode, la puissance électrique fournie à la machine électrique principale est éventuellement inférieure à la puissance électrique requise, conduisant ainsi à un démarrage du moteur thermique à performances moindres. Cette configuration de fonctionnement peut aussi être utilisée pour apporter de la puissance électrique à un générateur de gaz du moteur thermique en prélevant de l'énergie sur la batterie durant une phase d'hybridation.

Par ailleurs, on peut alimenter au moins un équipement électrique fonctionnant avec un courant alternatif à haute tension via un convertisseur multifonction.

L'invention et ses avantages apparaîtront avec plus de détails dans le cadre de la description qui suit avec des exemples donnés à titre illustratif en référence aux figures annexées qui représentent :
- la figure 1, une vue schématique d'un aéronef selon l'invention,
- la figure 2, une vue schématique d'un convertisseur multifonction, et
- la figure 3, une vue schématique d'un coeur électrique à haute tension.

Les éléments présents dans plusieurs figures distinctes sont affectés d'une seule et même référence.

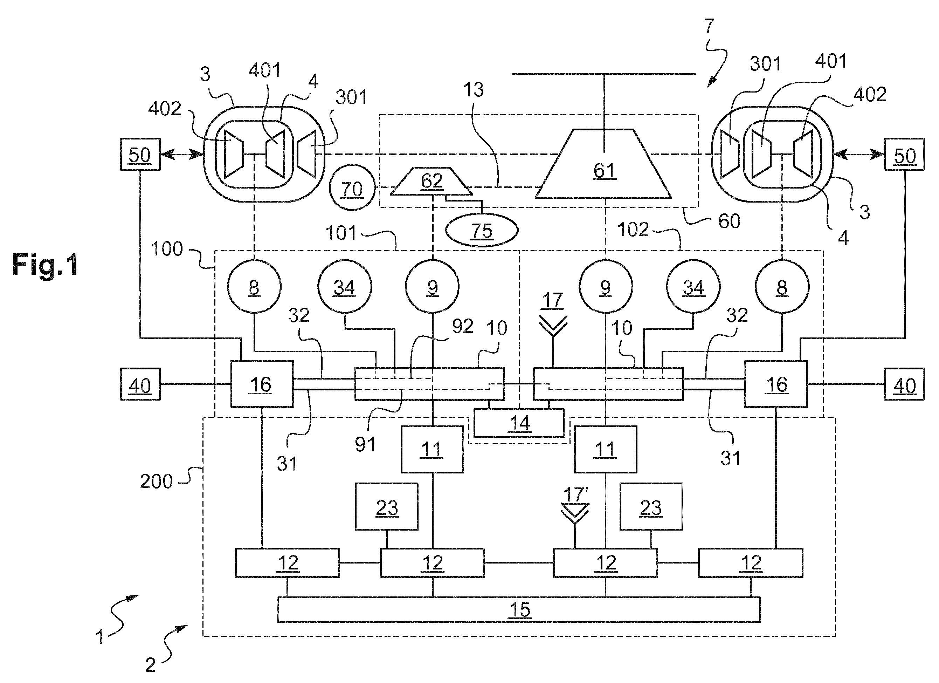

La figure 1 présente un aéronef 1. Cet aéronef est par exemple un giravion muni d'au moins un rotor de sustentation 7. Dès lors, ce rotor de sustentation 7 participe au moins partiellement à la sustentation de l'aéronef 1, voire à la propulsion de l'aéronef.

Cet aéronef comporte alors une installation motrice pour notamment mettre en rotation ce rotor de sustentation.

Cette installation motrice comporte au moins un moteur thermique 3 entraînant un ensemble 60 de transmission de puissance.

Un tel moteur thermique 3 peut être un turbomoteur comprenant un générateur de gaz 4, Ce générateur de gaz 4 est alors classiquement muni d'au moins un étage de compression 402 relié à une turbine haute pression 401. De plus, le turbomoteur peut comprendre au moins un étage de turbine libre 301 solidaire d'un arbre de sortie qui est relié généralement indirectement à l'ensemble 60 de transmission de puissance. Par exemple, chaque arbre de sortie peut être relié à l'ensemble 60 de transmission de puissance par une chaîne cinématique incluant une roue libre, un arbre de liaison et des organes autorisant un désalignement angulaire et/ou axial entre des pièces mécaniques.

La figure 1 présente deux moteurs thermiques de type turbomoteur.

Par suite, l'ensemble 60 de transmission de puissance est muni d'une boîte de transmission de puissance 61 mise en mouvement par les moteurs thermiques 3. Cette boîte de transmission 61 comporte un mât rotor entraînant en rotation le rotor de sustentation 7.

De plus, l'ensemble 60 de transmission de puissance peut comporter une boîte à accessoires 62 qui est mécaniquement reliée à la boîte de transmission de puissance 61 par au moins un arbre intermédiaire 13.

La boîte à accessoires peut permettre le fonctionnement d'accessoires 75. Ainsi, la boîte à accessoires est reliée à ces accessoires 75.

En outre, l'aéronef peut comporter une moteur auxiliaire 70 mettant en mouvement la boîte à accessoires 62. Un tel moteur auxiliaire peut être un moteur connu sous l'acronyme APU.

Par ailleurs, l'aéronef est muni d'un système de contrôle 50 par moteur thermique. Le système de contrôle 50 peut permettre de recevoir des données relatives au fonctionnement du moteur thermique et/ou peut contrôler le fonctionnement du moteur thermique par exemple en contrôlant un doseur de carburant.

Un tel système de contrôle peut être un système connu sous l'acronyme FADEC ou l'acronyme ECU. L'acronyme FADEC fait référence à l'expression anglaise « Full Authority Digital Engine Control », l'expression ECU faisant référence à l'expression anglaise « Engine Control Unit ».

On se référera à la littérature pour obtenir des descriptions d'une installation motrice d'un aéronef.

Par ailleurs, cet aéronef 1 comporte une architecture électrique 2 coopérant avec l'installation motrice.

Cette architecture électrique 2 comprend un réseau électrique à haute tension 100 relié mécaniquement à l'installation motrice, voire un réseau électrique à basse tension 200 relié électriquement au réseau électrique à haute tension 100.

Ce réseau électrique à haute tension 100 comprend un sous-ensemble à haute tension 101, 102 par moteur thermique 3. Sur un aéronef multimoteur, les sous-ensembles à haute tension 101, 102 sont éventuellement électriquement reliés l'un à l'autre.

La figure 1 présente un aéronef bimoteur muni de deux sous-ensembles. Toutefois, cette figure 1 illustre une variante de l'invention, l'aéronef pouvant comporter un unique moteur thermique et donc un unique sous-ensemble, ou au moins trois moteurs thermiques et donc au moins trois sous-ensemble par exemple.

Autrement dit, l'invention propose un aéronef comportant au moins un moteur thermique associé à une architecture électrique comportant au moins un sous-ensemble.

Chaque sous-ensemble à haute tension 101, 102 comporte une machine électrique principale 8 mécaniquement reliée à un moteur thermique 3. La machine électrique principale 8 fonctionne :
- soit dans un mode moteur électrique durant lequel la machine électrique principale 8 prélève de l'énergie électrique pour entraîner le générateur de gaz 4,
- soit dans un mode générateur électrique durant lequel la machine électrique principale 8 est entraînée par le générateur de gaz 4 pour générer de l'énergie électrique.

De plus, chaque sous-ensemble à haute tension 101, 102 peut comporter une machine électrique secondaire 9 mécaniquement reliée à l'ensemble 60 de transmission de puissance.

Dès lors, une machine électrique secondaire 9 peut être mécaniquement connectée à la boîte de transmission de puissance 61 ou à une boîte à accessoires 62.

Par exemple, un premier sous-ensemble à haute tension 101 comporte une machine électrique secondaire 9 connectée à la boîte à accessoires 62, et un deuxième sous-ensemble à haute tension 102 comporte une machine électrique secondaire 9 connectée à la boîte de transmission de puissance 61.

Chaque machine électrique secondaire 9 fonctionne :
- soit dans un mode moteur électrique durant lequel la machine électrique secondaire 9 prélève de l'énergie électrique pour entraîner au moins partiellement l'ensemble 60 de transmission de puissance,
- soit dans un mode générateur électrique durant lequel la machine électrique secondaire 9 est entraînée par l'ensemble 60 de transmission de puissance pour générer de l'énergie électrique.

Par ailleurs, au moins un sous-ensemble à haute tension 101, 102 peut comporter un organe électrique de type moteur électrique. Cet organe électrique est dénommé plus simplement « moteur électrique 34 ».

Dès lors, chaque sous-ensemble à haute tension comporte un unique coeur électrique à haute tension 10 et un unique convertisseur multifonction 16 pour alimenter électriquement les machines électriques du sous-ensemble, et/ou pour prélever de l'énergie électrique sur ces machines électriques.

Deux sous-ensembles à haute-tension distincts peuvent être reliés électriquement l'un à l'autre.

Selon une variante, deux sous-ensembles à haute-tension distincts comprennent chacun un coeur électrique à haute tension 10, les deux coeurs électriques à haute tension 10 étant reliés l'un à l'autre, par le biais d'interrupteurs par exemple.

Selon une variante alternative, deux sous-ensembles à haute-tension distincts comprennent un unique coeur électrique à haute tension commun.

Par suite, l'aéronef peut comporter un convertisseur multifonction 16 et un moteur électrique principal 8 par moteur thermique. On appelle donc « sous-ensemble haute tension », une partie d'un réseau électrique à haute tension comprenant un coeur électrique à haute tension, un convertisseur multifonction et un moteur électrique principal.

Par suite, un coeur électrique à haute tension 10 est relié à un convertisseur multifonction 16 par une première ligne électrique dite « première ligne 31 ».

En outre, le convertisseur multifonction 16 peut être relié directement à la machine électrique principale 8.

Toutefois, ce convertisseur multifonction 16 peut être relié indirectement à la machine électrique principale 8 par le coeur électrique.

Dès lors, le convertisseur multifonction 16 représenté sur la figure 1 est relié à un coeur électrique à haute tension 10 par ladite première ligne 31, mais aussi par une deuxième ligne électrique dite « deuxième ligne 32 ».

Dès lors, le coeur électrique à haute tension 10 est électriquement relié à au moins une source électrique. Ainsi, le coeur électrique à haute tension 10 comporte une première liaison 91 électrique reliée à la première ligne 31 pour acheminer un courant électrique provenant d'une source électrique vers le convertisseur multifonction.

Deux coeurs électriques à haute tension 10 de deux sous-ensembles peuvent aussi être reliés électriquement par leur première liaison.

Cette source électrique peut être une prise de parc à haute tension 17, une prise de parc à basse tension 17', une batterie 23 et une machine électrique secondaire 9.

Ainsi, une prise de parc à haute tension 17 reliée à la première liaison d'un coeur électrique à haute tension 10 peut transmettre de l'énergie électrique à la première liaison d'un autre coeur électrique à haute tension 10 conformément à la variante de la figure 1.

De plus, l'architecture électrique peut comporter un réseau électrique basse tension 200 comportant au moins une source électrique apte à alimenter électriquement ou à être alimentée électriquement par le convertisseur multifonction.

Ce réseau électrique basse tension 200 inclut une pluralité d'équipements basse tension 15 fonctionnant en utilisant un courant électrique à basse tension.

Dès lors, le réseau électrique basse tension 200 est pourvu d'une pluralité de coeurs électriques basse tension 12 reliés à l'équipement basse tension et reliés deux à deux. Le réseau électrique basse tension 200 est muni d'au moins un coeur électrique à basse tension 12, un tel coeur électrique à basse tension 12 étant connecté à un coeur électrique à haute tension par un convertisseur courant alternatif haute tension/courant continu basse tension 11.

Par suite, la source électrique peut comporter au moins une batterie 23 reliée électriquement à un coeur électrique à basse tension 12.

Cette source électrique peut aussi comporter une prise de parc à basse tension 17' reliée électriquement à un coeur électrique à basse tension 12.

Outre une première liaison 91, le coeur électrique à haute tension 10 comporte une deuxième liaison 92 électrique reliée à la deuxième ligne 32 et à chaque organe électrique. La deuxième liaison 92 est donc reliée à la machine électrique principale 8 ainsi qu'à la machine électrique secondaire 9 et le cas échéant à un moteur électrique 34.

Par ailleurs, la deuxième liaison 92 d'un coeur électrique à haute tension 10 peut alimenter électriquement un équipement électrique 14 fonctionnant avec un courant alternatif à haute tension. Un tel équipement est dénommé « équipement haute tension » par commodité.

Par ailleurs, chaque convertisseur est relié par une liaison filaire ou non filaire avec le système de contrôle 50 du moteur thermique correspondant. En outre, ce convertisseur multifonction est relié à un système avionique 40 de l'aéronef.

Ce système avionique est capable d'acquérir des données représentant les états de fonctionnement du convertisseur multifonction, tel que son état / statut, des paramètres opérationnels et défauts. Ce système avionique peut inclure un moyen de stockage d'informations et éventuellement un système d'affichage pour afficher ces informations à un équipage.

Le système avionique comprend des capteurs usuels pour acquérir des données environnementales telles que la température extérieure et l'altitude de l'aéronet.

Les données provenant du système avionique peuvent être retransmises au système de contrôle 50 par le convertisseur multifonction 16. Par exemple, le système de contrôle 50 adapte alors la demande de puissance nécessaire au démarrage du moteur thermique, puis communique au convertisseur multifonction 16 le niveau de couple, de vitesse ou d'accélération demandé.

De manière alternative, des niveaux de couple, vitesse ou accélération sont mémorisés dans le convertisseur multifonction, le convertisseur multifonction sélectionnant les niveaux adéquats en fonction des données de contexte environnementales fournies par le système avionique et/ou le système de contrôle 50.

Un contrôleur détermine alors les sources d'énergie disponibles et éventuellement sélectionne une source d'énergie pour l'adapter à la demande de puissance requise par système de contrôle 50.

Dès lors, le convertisseur multifonction d'un sous-ensemble à haute tension communique avec le coeur électrique à haute tension de ce sous-ensemble à haute tension pour alimenter électriquement au moins une machine électrique 8, 34, 9 et au moins un équipement électrique 14 et/ou pour prélever de l'énergie électrique à partir d'au moins une desdites machines électriques 8, 9 en fonction de la phase de fonctionnement courante. En effet, le convertisseur multifonction détermine à partir de données provenant du système avionique 40 et du système de contrôle 50 la nature de la phase de fonctionnement courante, et pilote en conséquence les machines électriques.

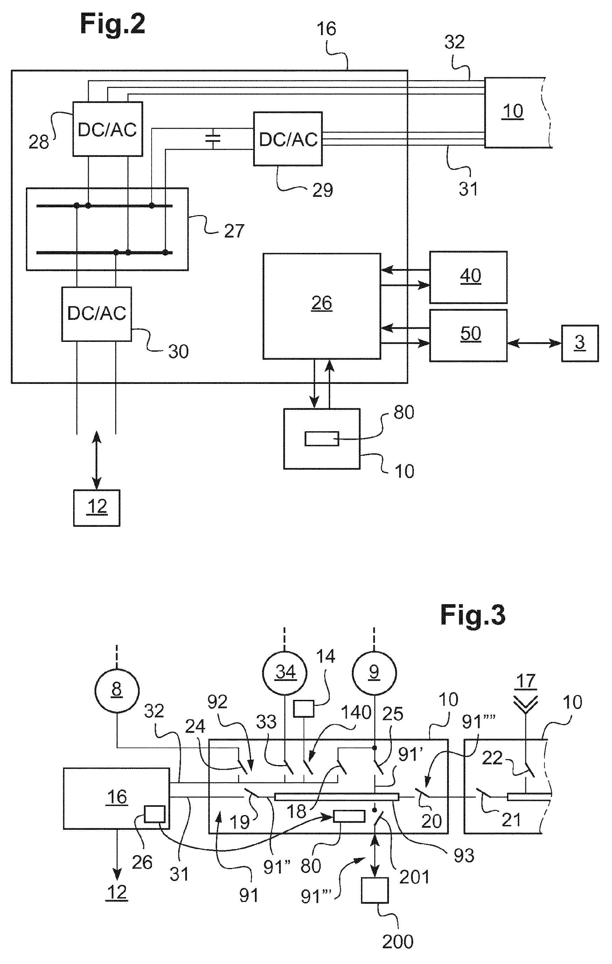

Par conséquent et en référence à la figure 2, un convertisseur multifonction comporte un bus à courant continu haute tension 27.

Ce bus à courant continu haute tension 27est relié à la deuxième ligne 32 par un onduleur bidirectionnel 28.

De plus, le bus à courant continu haute tension 27 est relié électriquement directement ou indirectement à la première ligne 31.

Selon la variante de la figure 2, le bus à courant continu haute tension 27 est relié électriquement indirectement à la première ligne 31 par un convertisseur courant alternatif haute tension/courant continu haute tension 29. Toutefois, ce convertisseur courant alternatif haute tension/courant continu haute tension 29 peut éventuellement être omis suivant la nature du courant électrique transmis par une prise de parc à haute tension par exemple.

En outre, le bus à courant continu haute tension 27 est relié électriquement au réseau électrique à basse tension par un convertisseur haute tension continue/basse tension continue 30.

L'onduleur bidirectionnel 28, le convertisseur haute tension continue/basse tension continue 30, le convertisseur courant alternatif haute tension/courant continu haute tension 29 et le bus à courant continu haute tension 27 sont alors pilotés par un superviseur 26 du convertisseur multifonction.

En référence à la figure 3, ce superviseur 26 communique en outre avec un contrôleur 80 du coeur électrique à haute tension 10 correspondant.

En effet, ce coeur électrique à haute tension 10 comporte de multiples interrupteurs et un bus électrique pilotés par le contrôleur 80 sur ordre du superviseur 26.

Ainsi, la première liaison 91 comporte un bus 93. Ce bus 93 est alors relié :
- à la machine électrique secondaire 9 par un premier tronçon 91' de la première liaison 91 incluant un premier interrupteur primaire 25,
- à la première ligne 31 par un deuxième tronçon 91" de la première liaison 91 incluant un deuxième interrupteur primaire 19,
- à un réseau électrique basse tension 200 par un troisième tronçon 91'" de la première liaison 91 incluant un troisième interrupteur primaire 201,
- à un autre coeur électrique à haute tension par un quatrième tronçon 91"" de la première liaison 91 incluant un quatrième interrupteur primaire 20, 21,
- à une prise de parc par un cinquième tronçon de la première liaison 91 incluant un cinquième interrupteur primaire 22.

En outre, la deuxième liaison est reliée :
- à la machine électrique principale 8 par un premier segment incluant un premier interrupteur secondaire 24,
- au moteur électrique 34 par un deuxième segment incluant un deuxième interrupteur secondaire 33,
- à la machine électrique secondaire 9 par un troisième segment incluant un troisième interrupteur secondaire 18,
- à un équipement électrique 14 par un quatrième segment incluant un quatrième interrupteur secondaire 140.

Une telle architecture électrique peut fonctionner selon divers modes en fonction de la phase de fonctionnement courante.

Durant une première étape STP1 correspondant à une phase de fonctionnement au sol, tous les moteurs thermiques 3 sont éteints.

Cependant, certains accessoires hydrauliques, électriques ou pneumatiques sur l'aéronef peuvent éventuellement être utilisés.

En particulier, des accessoires 75 reliés à la boîte à accessoires 62 peuvent être sollicités.

Dès lors, une énergie électrique est prélevée sur une source électrique puis acheminée dans le réseau électrique à haute tension 100 vers une machine électrique secondaire 9 en passant par le convertisseur multifonction 16. Cette machine électrique secondaire 9 fonctionne en mode moteur électrique pour entraîner la boîte à accessoires 62.

Par exemple, le superviseur du convertisseur multifonction 16 détecte via le système avionique que l'aéronef est au sol, par le biais d'une information relative à un effort exercé sur un train d'atterrissage par exemple. De plus, ce superviseur détecte via les systèmes de contrôle que les moteurs thermiques sont éteints.

Ce superviseur peut aussi détecter que le fonctionnement d'un accessoire est requis. Par exemple, la manoeuvre d'un bouton de commande d'un accessoire envoie un signal au superviseur par le système avionique.

Dès lors, le superviseur ordonne au contrôleur du coeur électrique à haute tension de fermer le troisième interrupteur secondaire 18. De plus, le contrôleur ordonne d'ouvrir le premier interrupteur primaire 25, le premier interrupteur secondaire 24 et le deuxième interrupteur secondaire 33.

Selon une alternative, le contrôleur reçoit l'ordre de fonctionnement d'un accessoire. Ce contrôleur ferme alors les contacteurs adéquats, et signale au superviseur quel accessoire doit fonctionner.

Le contrôleur et le superviseur peuvent aussi recevoir l'ordre de fonctionnement d'un accessoire en même temps.

Indépendamment de la variante, si l'énergie électrique est prélevée sur une prise de parc à haute tension 17 reliée au coeur électrique à haute tension concerné, le cinquième interrupteur primaire 22 et le deuxième interrupteur primaire 19 sont fermés.

Si l'énergie électrique est prélevée sur une prise de parc à haute tension 17 reliée à un coeur électrique à haute tension distinct du coeur électrique à haute tension piloté, alors le deuxième interrupteur primaire 19, le cinquième interrupteur primaire 22 et les quatrièmes interrupteurs primaires 20, 21 sont fermés.

Le superviseur peut déterminer qu'une prise de parc à haute tension 17 est utilisée via le système avionique.

Le contrôleur 80 peut aussi déterminer qu'une prise de parc haute tension est utilisée, envoyer cette information au système avionique qui lui-même autorisera ou non l'activation de l'une ou l'autre fonction du convertisseur multifonction.

Le superviseur pilote alors le bus à courant continu haute tension 27, l'onduleur bidirectionnel 28 et le cas échéant le convertisseur courant alternatif haute tension/courant continu haute tension 29 pour fournir le courant électrique requis à la machine électrique secondaire 9.

Si l'énergie électrique est prélevée sur le réseau électrique basse tension 200 par une batterie ou une prise de parc à basse tension. Cette énergie est transmise au convertisseur multifonction directement par un coeur électrique à basse tension 12, ou indirectement par convertisseur courant alternatif haute tension/courant continu basse tension 11 et un coeur électrique à haute tension 10.

Le superviseur peut déterminer que le réseau électrique basse tension 200 est utilisé via le système avionique, ou via un coeur électrique à basse tension 12.

Le superviseur pilote alors le bus à courant continu haute tension 27, l'onduleur bidirectionnel 28 et le convertisseur courant haute tension continue /courant basse tension continue 30 pour fournir le courant électrique requis à la machine électrique secondaire 9.

Durant la première étape, une énergie électrique peut être prélevée et acheminée vers le réseau électrique à basse tension 200 successivement via au moins un coeur électrique à haute tension 10, une première ligne 31 et ledit convertisseur multifonction 16. Cette énergie peut alors servir à recharger la batterie 23 et/ ou à faire fonctionner des équipements fonctionnant à basse tension, en complément ou indépendamment du convertisseur courant alternatif haute tension/courant continu basse tension 11.

Si l'énergie électrique est prélevée sur une prise de parc à haute tension 17 reliée au coeur électrique à haute tension concerné, le cinquième interrupteur primaire 22 et le deuxième interrupteur primaire 19 sont fermés.

Si l'énergie électrique est prélevée sur une prise de parc à haute tension 17 reliée à un coeur électrique à haute tension distinct du coeur électrique à haute tension piloté, alors le deuxième interrupteur primaire 19, le cinquième interrupteur primaire 22 et les quatrièmes interrupteurs primaires 20, 21 sont fermés.

Le superviseur pilote alors le bus à courant continu haute tension 27, le convertisseur courant haute tension continue /courant basse tension continue 30 et le cas échéant le convertisseur courant alternatif haute tension/courant continu haute tension 29 pour fournir le courant électrique requis au réseau électrique à basse tension 200.

Durant une deuxième étape STP2 correspondant à une étape de démarrage d'un moteur thermique 3 effectuée durant une phase de fonctionnement au sol, une énergie électrique est prélevée sur une source électrique puis acheminée dans le réseau électrique à haute tension 100 vers une machine électrique principale 8 au travers du convertisseur multifonction 16, d'une deuxième ligne 32 puis du coeur électrique à haute tension 10. La machine électrique principale 8 fonctionne alors en mode moteur pour démarrer ledit moteur thermique.

Selon une première variante, l'énergie est prélevée sur une prise de parc à haute tension.

Si l'énergie électrique est prélevée sur une prise de parc à haute tension 17 reliée au coeur électrique à haute tension concerné, le cinquième interrupteur primaire 22 et le deuxième interrupteur primaire 19 et premier interrupteur secondaire 24sont fermés. Le deuxième interrupteur secondaire 33, le quatrième interrupteur secondaire 140 et le premier interrupteur primaire 25 sont ouverts.

Si l'énergie électrique est prélevée sur une prise de parc à haute tension 17 reliée à un coeur électrique à haute tension distinct du coeur électrique à haute tension piloté, alors le deuxième interrupteur primaire 19, le cinquième interrupteur primaire 22, les quatrièmes interrupteurs primaires 20, 21 et premier interrupteur secondaire 24 sont fermés. Le deuxième interrupteur secondaire 33, le quatrième interrupteur secondaire 140 et le premier interrupteur primaire 25 sont ouverts.

Durant ces phases, le troisième interrupteur primaire 201 est favorablement fermé. Plus généralement, le troisième interrupteur primaire 201 est fermé dès lors que le réseau électrique à haute tension est alimenté soit par la prise de parc à haute tension 17, soit par la machine électrique secondaire 9.

Le superviseur pilote alors le bus à courant continu haute tension 27, l'onduleur bidirectionnel 28 et le cas échéant le convertisseur courant alternatif haute tension/courant continu haute tension 29 pour fournir le courant électrique requis à la machine électrique principale 8.

Selon une deuxième variante, l'énergie électrique est générée par la machine électrique secondaire. Dès lors, le moteur auxiliaire 70 est sollicité pour produire un courant électrique à l'aide de la machine électrique secondaire. Ce moteur auxiliaire aura été au préalable démarré, par exemple sur batterie ou prise de parc 28Vdc via un démarreur 28Vdc.

Le premier interrupteur primaire 25, le deuxième interrupteur primaire 19, le premier interrupteur secondaire 24 et les quatrièmes interrupteurs primaires 20, 21 sont fermés. Le deuxième interrupteur secondaire 33 et le quatrième interrupteur secondaire 140 sont ouverts.

Le superviseur pilote alors le bus à courant continu haute tension 27, l'onduleur bidirectionnel 28 et le cas échéant le convertisseur courant alternatif haute tension/courant continu haute tension 29 pour fournir le courant électrique requis à la machine électrique principale 8.

Selon une troisième variante dégradée, l'énergie est prélevée sur une prise de parc à basse tension ou une batterie.

Dès lors, le troisième interrupteur primaire 201, le deuxième interrupteur primaire 19 et le premier interrupteur secondaire 24 sont fermés.

Le superviseur pilote alors le bus à courant continu haute tension 27, l'onduleur bidirectionnel 28 et le cas échéant le convertisseur courant alternatif haute tension/courant continu haute tension 29 pour fournir le courant électrique requis à la machine électrique principale 8.

Le convertisseur multifonction peut aussi être alimenté directement par le réseau électrique basse tension 200.

La deuxième étape peut s'arrêter lorsque le superviseur détecte que le moteur thermique est démarré. Par exemple, le superviseur surveille à cet effet l'évolution de la vitesse de rotation d'un générateur de gaz du moteur thermique, éventuellement via le système de contrôle 50.

Durant une troisième étape STP3 correspondant à une étape de génération électrique, le superviseur peut requérir la génération d'un courant électrique.

Par exemple, le superviseur peut détecter un affaiblissement des capacités d'une batterie ou la nécessité d'alimenter électriquement soit un équipement basse tension 15 soit un équipement haute tension 14.

Dès lors, la machine électrique principale 8 peut fonctionner en mode générateur électrique pour générer de l'énergie électrique. Cette énergie électrique est alors transmise au convertisseur multifonction 16 successivement via un coeur électrique à haute tension 10 et une deuxième ligne 32.

Dès lors, le premier interrupteur secondaire 24, voire éventuellement le deuxième interrupteur primaire 19 et le troisième interrupteur primaire 201 sont fermés. Les autres interrupteurs sont ouverts.

Le superviseur pilote alors le bus à courant continu haute tension 27, l'onduleur bidirectionnel 28, et le cas échéant le convertisseur courant alternatif haute tension/courant continu haute tension 29 ou le convertisseur haute tension continue/basse tension continue 30.

L'énergie électrique est alors transmise au réseau électrique basse tension par le convertisseur haute tension continue/basse tension continue 30, ou à un coeur électrique à haute tension via la première ligne 31.

De même, la machine électrique secondaire 9 peut fonctionner en mode générateur électrique pour générer de l'énergie électrique. Cette énergie électrique est alors transmise au convertisseur multifonction 16 successivement via un coeur électrique à haute tension 10 et une deuxième ligne 32.

Dès lors, le troisième interrupteur secondaire 18 et éventuellement le deuxième interrupteur primaire 19 sont fermés. Les autres interrupteurs sont ouverts.

Le superviseur pilote alors le bus à courant continu haute tension 27, l'onduleur bidirectionnel 28, et le cas échéant le convertisseur courant alternatif haute tension/courant continu haute tension 29 et/ou le convertisseur haute tension continue/basse tension continue 30.

L'énergie électrique est alors transmise au réseau électrique basse tension par le convertisseur haute tension continue/basse tension continue 30, ou à un coeur électrique à haute tension via la première ligne 31.

Durant une quatrième étape STP4 correspondant en vol à une phase d'hybridation, on prélève de l'énergie électrique sur ladite source électrique puis on achemine cette énergie électrique dans ledit réseau électrique à haute tension 100 vers ledit convertisseur multifonction 16, une deuxième ligne 32 puis ledit coeur électrique à haute tension 10, ladite machine électrique principale 8 fonctionnant en mode moteur.

Cette énergie peut provenir de la machine électrique secondaire fonctionnant en mode générateur. Dès lors, le premier interrupteur primaire 25, le deuxième interrupteur primaire 19, le premier interrupteur secondaire 24 et le troisième interrupteur primaire 201 sont fermés. Les autres interrupteurs sont ouverts.

Le superviseur pilote alors le bus à courant continu haute tension 27, l'onduleur bidirectionnel 28, et le cas échéant le convertisseur courant alternatif haute tension/courant continu haute tension 29.

Cette énergie peut provenir du réseau électrique basse tension 200. Dès lors, le premier interrupteur secondaire 24 et le troisième interrupteur primaire 201 sont fermés. Les autres interrupteurs sont ouverts.

Le superviseur pilote alors le bus à courant continu haute tension 27, l'onduleur bidirectionnel 28, et le convertisseur haute tension continue/basse tension continue 30.

Par ailleurs, l'architecture permet aussi de prélever de l'énergie électrique sur le réseau électrique basse tension pour faire fonctionner un équipement haute tension 14.

Dès lors, le troisième interrupteur primaire 201, le deuxième interrupteur primaire 19 et le quatrième interrupteur secondaire 140 sont fermés. Les autres interrupteurs sont ouverts.

Le superviseur pilote alors le bus à courant continu haute tension 27, l'onduleur bidirectionnel 28, et le convertisseur haute tension continue/basse tension continue 30.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention comme défini par les revendications qui suivent.

## Revendications

1. Architecture (2) électrique pour un aéronef (1) comprenant un ensemble (60) de transmission de puissance relié au moins à un rotor de sustentation (7) et entraîné par au moins un moteur thermique (3), ladite architecture (2) électrique comprenant un réseau électrique à haute tension (100) incluant une machine électrique principale (8) destinée à être reliée à ce moteur thermique (3) et une machine électrique secondaire (9) destinée à être reliée à l'ensemble (60) de transmission de puissance,
**caractérisée en ce que** ledit réseau électrique à haute tension (100) comporte au moins un coeur électrique à haute tension (10) relié à au moins une source électrique (9, 17, 17', 23), ledit coeur électrique à haute tension (10) étant relié par une première ligne (31) et par une deuxième ligne (32) à un convertisseur multifonction (16), ledit coeur électrique à haute tension (10) comportant une première liaison (91) reliant ladite première ligne (31) à ladite machine électrique secondaire, ledit coeur électrique à haute tension (10) comportant une deuxième liaison (92) reliant ladite deuxième ligne (32) à au moins ladite machine électrique principale (8) et ladite machine électrique secondaire (9), ledit convertisseur multifonction (16) comportant un bus à courant continu haute tension (27) relié à un onduleur bidirectionnel (28), ledit onduleur bidirectionnel (28) étant relié à la deuxième ligne (32), ledit bus à courant continu haute tension (27) communiquant électriquement avec la première ligne (31), ledit convertisseur multifonction (16) comprenant un superviseur (26) relié à un système avionique (40) ainsi qu'à un système de contrôle (50) destiné à contrôler le moteur thermique (3) et à un contrôleur (80) du coeur électrique à haute tension (10) pour alimenter électriquement au moins une machine électrique (8, 34, 9) et/ou prélever de l'énergie électrique via le convertisseur multifonction (16) à partir d'au moins une desdites machines électriques (8, 9) en fonction de phases de fonctionnement déterminées à partir dudit système avionique (40) et dudit système de contrôle (50).

2. Architecture électrique selon la revendication 1,
**caractérisée en ce que** ladite source électrique comporte une prise de parc à haute tension (17) alimentant électriquement un coeur électrique à haute tension (10).

3. Architecture électrique selon l'une quelconque des revendications 1 à 2,
**caractérisée en ce que** ladite architecture (2) comporte au moins un moteur électrique (34) alimenté électriquement par ladite deuxième ligne (32) au travers dudit coeur électrique à haute tension (10).

4. Architecture électrique selon l'une quelconque des revendications 1 à 3,
**caractérisée en ce que** ladite architecture (2) comporte deux moteurs thermiques (3), chaque moteur thermique (3) étant relié à un dit convertisseur multifonction (16) par un coeur électrique à haute tension (10), lesdits coeurs électriques haute tension (10) étant reliés entre eux, au moins un coeur électrique à haute tension (10) étant relié à une prise de parc à haute tension (17).

5. Architecture électrique selon l'une quelconque des revendications 1 à 4,
**caractérisée en ce que** ladite architecture (2) comporte au moins un équipement électrique (14) fonctionnant avec un courant alternatif à haute tension relié à un coeur électrique à haute tension (10).

6. Architecture électrique selon l'une quelconque des revendications 1 à 5,
**caractérisée en ce que** ladite architecture (2) comporte un réseau électrique à basse tension (200) relié à chaque coeur électrique à haute tension (10) par un convertisseur courant alternatif haute tension/courant continu basse tension (11), ladite source électrique comportant au moins une batterie (23) reliée audit convertisseur courant alternatif haute tension/courant continu basse tension (11) via un coeur électrique à basse tension (12).

7. Architecture électrique selon l'une quelconque des revendications 1 à 6,
**caractérisée en ce que** ladite architecture (2) comporte un réseau électrique à basse tension (200) relié à chaque coeur électrique à haute tension (10) par un convertisseur courant alternatif haute tension/courant continu basse tension (11), ladite source électrique comportant au moins une prise de parc à basse tension (17') reliée à un coeur électrique à basse tension (12) dudit réseau électrique à basse tension (200).

8. Architecture électrique selon l'une quelconque des revendications 1 à 7,
**caractérisée en ce que** ledit convertisseur multifonction (16) comporte un convertisseur haute tension continue/basse tension continue (30) relié à un réseau électrique à basse tension (200) et audit bus à courant continu haute tension (27).

9. Architecture électrique selon l'une quelconque des revendications 1 à 8,
**caractérisée en ce que** ledit bus à courant continu haute tension (27) communiquant électriquement avec la première ligne (31) en étant relié à un convertisseur courant alternatif haute tension/courant continu haute tension (29), ce convertisseur courant alternatif haute tension/courant continu haute tension (29) étant relié à la première ligne (31).

10. Aéronef (1) comprenant un ensemble (60) de transmission de puissance relié au moins à un rotor de sustentation (7) et entraîné par au moins un moteur thermique (3),
**caractérisé en ce que** ledit aéronef (1) comporte une architecture (2) selon l'une quelconque des revendications 1 à 9.

11. Aéronef selon la revendication 10,
**caractérisée en ce que** ledit ensemble (60) de transmission comportant une boîte de transmission de puissance (61) entraînée par chaque moteur thermique (3), ladite machine électrique secondaire (9) est destinée à être reliée à ladite boîte de transmission de puissance (61).

12. Aéronef selon l'une quelconque des revendications 10 à 11,
**caractérisée en ce que** ledit ensemble (60) de transmission comportant une boîte de transmission de puissance (61) entraînée par chaque moteur thermique (3), ladite boîte de transmission de puissance (61) entraînant une boîte à accessoires (62), ladite machine électrique secondaire (9) est destinée à être reliée à ladite boîte à accessoires (62).

13. Aéronef selon l'une quelconque des revendications 10 à 12,
**caractérisée en ce que** ledit ensemble (60) de transmission comportant une boîte de transmission de puissance (61) entraînée par chaque moteur thermique (3), ladite boîte de transmission de puissance (61) entraînant une boîte à accessoires (62), ladite architecture (2) comporte un moteur auxiliaire (70) entraînant ladite boîte à accessoires (62).

14. Procédé d'utilisation d'un aéronef selon l'une quelconque des revendications 10 à 13,
**caractérisé en ce que** :
- durant une étape de démarrage (STEP2) dudit moteur thermique (3) effectué durant une phase de fonctionnement au sol, on prélève de l'énergie électrique sur ladite source électrique (9, 17, 17', 23) puis on achemine cette énergie électrique dans ledit réseau électrique à haute tension (100) vers ledit convertisseur multifonction (16), une deuxième ligne (32) puis ledit coeur électrique à haute tension (10), ladite machine électrique principale (8) fonctionnant en mode moteur pour démarrer ledit moteur thermique
- durant une étape de génération électrique (STEP3), on génère de l'énergie électrique avec ladite machine électrique principale (8) fonctionnant en mode générateur électrique, et on transfère ladite énergie électrique audit convertisseur multifonction (16) successivement via un coeur électrique à haute tension (10) et une deuxième ligne (32),
- en vol et durant une phase d'hybridation (STEP4), on prélève de l'énergie électrique sur ladite source électrique (9, 23) puis on achemine cette énergie électrique dans ledit réseau électrique à haute tension (100) vers ledit convertisseur multifonction (16), une deuxième ligne (32) puis ledit coeur électrique à haute tension (10), ladite machine électrique principale (8) fonctionnant en mode moteur.

15. Procédé électrique selon la revendication 14,
**caractérisé en ce que** durant une phase de fonctionnement au sol (STEP1), on prélève de l'énergie électrique sur ladite source électrique (17, 17', 23) puis on achemine cette énergie électrique dans ledit réseau électrique à haute tension (100) vers ladite machine électrique secondaire (9) successivement via au moins un coeur électrique à haute tension (10), une première ligne (31), un convertisseur multifonction (16), une deuxième ligne (32) puis ledit coeur électrique à haute tension (10), ladite machine électrique secondaire (9) fonctionnant en mode moteur pour entraîner au moins partiellement ledit ensemble (60) de transmission.

16. Procédé électrique selon l'une quelconque des revendications 14 à 15,
**caractérisé en ce que** durant une phase de fonctionnement au sol (STEP1), on prélève de l'énergie électrique sur ladite source électrique puis on achemine cette énergie électrique vers un réseau électrique à basse tension (200) successivement via au moins un coeur électrique à haute tension (10), une première ligne (31) et ledit convertisseur multifonction (16).

17. Procédé selon l'une quelconque des revendications 14 à 16,
**caractérisé en ce qu'**on prélève de l'énergie électrique sur ladite source électrique en prélevant de l'énergie électrique sur une prise de parc à haute tension (17) alimentant au moins un coeur électrique à haute tension (10).

18. Procédé selon l'une quelconque des revendications 14 à 17,
**caractérisé en ce qu'**on prélève de l'énergie électrique sur ladite source électrique en :
- entraînant une boîte à accessoires (62) dudit ensemble (60) de transmission de puissance via un moteur auxiliaire (70),
- en générant de l'énergie électrique à partir d'une machine électrique secondaire (9) en prise sur ladite boîte à accessoires (62) pour requérir le fonctionnement de ladite machine électrique secondaire (9) en mode générateur électrique, ladite machine électrique secondaire (9) représentant ladite source électrique alimentant électriquement au moins un coeur électrique à haute tension (10).

19. Procédé selon l'une quelconque des revendications 14 à 18,
**caractérisé en ce qu'**on prélève de l'énergie électrique sur ladite source électrique en prélevant de l'énergie électrique à partir d'une source électrique basse tension d'un réseau électrique à basse tension (200), et en transférant cette énergie électrique audit convertisseur multifonction (16).

20. Procédé selon la revendication 19,
**caractérisé en ce qu'**on achemine ladite énergie électrique vers un convertisseur multifonction (16) via au moins un coeur électrique à haute tension (10) puis une première ligne (31).

21. Procédé selon l'une quelconque des revendications 14 à 20,
**caractérisé en ce qu'**on alimente au moins un équipement électrique (14) fonctionnant avec un courant alternatif à haute tension via un convertisseur multifonction (14).

## Patentansprüche

1. Elektrischer Aufbau (2) für ein Luftfahrzeug (1) mit einer Leistungsübertragungseinheit (60), die mit mindestens einem Auftrieb erzeugenden Rotor (7) verbunden und von mindestens einem Verbrennungsmotor (3) angetrieben ist, wobei der elektrische Aufbau (2) ein elektrisches Hochspannungsnetz (100) aufweist mit einer elektrischen Hauptmaschine (8), die dazu bestimmt ist, mit diesem Verbrennungsmotor (3) verbunden zu werden, und einer elektrischen Sekundärmaschine (9), die dazu bestimmt ist, mit der Leistungsübertragungseinheit (60) verbunden zu werden,
**dadurch gekennzeichnet, dass** das elektrische Hochspannungsnetz (100) mindestens eine Hochspannungs-Stromverteilerzentrale (10) aufweist, die mit mindestens einer Stromquelle (9, 17, 17', 23) verbunden ist, wobei die Hochspannungs-Stromverteilerzentrale (10) über eine erste Leitung (31) und eine zweite Leitung (32) mit einem Multifunktionswandler (16) verbunden ist, wobei die Hochspannungs-Stromverteilerzentrale (10) eine erste Verbindung (91) aufweist, die die erste Leitung (31) mit der elektrischen Sekundärmaschine verbindet, wobei die Hochspannungs-Stromverteilerzentrale (10) eine zweite Verbindung (92) aufweist, die die zweite Leitung (32) mit mindestens der elektrischen Hauptmaschine (8) und der elektrischen Sekundärmaschine (9) verbindet, wobei der Multifunktionswandler (16) einen Hochspannungs-Gleichstrombus (27) aufweist, der mit einem bidirektionalen Wechselrichter (28) verbunden ist, wobei der bidirektionale Wechselrichter (28) mit der zweiten Leitung (32) verbunden ist, wobei der Hochspannungs-Gleichstrombus (27) elektrisch mit der ersten Leitung (31) kommuniziert, wobei der Multifunktionswandler (16) ein Leitsystem (26) aufweist, das mit einem flugtechnischen System (40) sowie mit einem Steuersystem (50), das dazu bestimmt ist, den Verbrennungsmotor (3) zu steuern, und mit einer Steuerung (80) der HochspannungsStromverteilerzentrale (10) verbunden ist, um mindestens eine elektrische Maschine (8, 34, 9) mit Strom zu speisen und/oder um elektrische Energie über den Multifunktionswandler (16) von mindestens einer der elektrischen Maschinen (8, 9) in Abhängigkeit von Betriebsphasen, die durch das flugtechnische System (40) und das Steuersystem (50) bestimmt werden, zu entnehmen.

2. Elektrischer Aufbau nach Anspruch 1,
**dadurch gekennzeichnet, dass** die elektrische Stromquelle einen Hochspannungs-Überbrückungsstecker (17) aufweist, der eine Hochspannungs-Stromverteilerzentrale (10) mit Strom versorgt.

3. Elektrischer Aufbau nach einem der Ansprüche 1 bis 2,
**dadurch gekennzeichnet, dass** der Aufbau (2) mindestens einen elektrischen Motor (34) aufweist, der über die zweite Leitung (32) mittels der Hochspannungs-Stromverteilerzentrale (10) mit Strom versorgt wird.

4. Elektrischer Aufbau nach einem der Ansprüche 1 bis 3,
**dadurch gekennzeichnet, dass** der Aufbau (2) zwei Verbrennungsmotoren (3) aufweist, wobei jeder Verbrennungsmotor (3) mit einem Multifunktionswandler (16) über eine HochspannungsStromverteilerzentrale (10) verbunden ist, wobei die Hochspannungs-Stromverteilerzentralen (10) miteinander verbunden sind, wobei mindestens eine Hochspannungs-Stromverteilerzentrale (10) mit einem Hochspannungs-Überbrückungsstecker (17) verbunden ist.

5. Elektrischer Aufbau nach einem der Ansprüche 1 bis 4,
**dadurch gekennzeichnet, dass** der Aufbau (2) mindestens eine elektrische Ausrüstung (14) aufweist, die mit einem Hochspannungs-Wechselstrom arbeitet und mit einer HochspannungsStromverteilerzentrale (10) verbunden ist.

6. Elektrischer Aufbau nach einem der Ansprüche 1 bis 5,
dadurch gekerlnzeichnet, dass der Aufbau (2) ein elektrisches Niederspannungsnetz (200) aufweist, das mit jeder HochspannungsStromverteilerzentrale (10) über einen HochspannungsWechselstrom-/Niederspannungs-Gleichstrom-Wandler (11) verbunden ist, wobei die Stromquelle mindestens eine Batterie (23) aufweist, die mit dem Hochspannungs-Wechselstrom/Niederspannungs-Gleichstrom-Wandler (11) über eine Niederspannungs-Stromverteilerzentrale (12) verbunden ist.

7. Elektrischer Aufbau nach einem der Ansprüche 1 bis 6,
**dadurch gekennzeichnet, dass** der Aufbau (2) ein NiederspannungsStromnetz (200) aufweist, das mit jeder HochspannungsStromverteilerzentrale (10) über einen HochspannungsWechselstrom-/Niederspannungs-Gleichstrom-Wandler (11) verbunden ist, wobei die Stromquelle mindestens einen Niederspannungs-Überbrückungsstecker (17') aufweist, der mit einer Niederspannungs-Stromverteilerzentrale (12) des elektrischen Niederspannungsnetzes (200) verbunden ist.

8. Elektrischer Aufbau nach einem der Ansprüche 1 bis 7,
**dadurch gekennzeichnet, dass** der Multifunktionswandler (16) einen Hochspannungs-Gleichstrom-/Niederspannungs-GleichstromWandler (30) aufweist, der mit einem Niederspannungs-Stromnetz (200) und mit dem Hochspannungs-Gleichstrombus (27) verbunden ist.

9. Elektrischer Aufbau nach einem der Ansprüche 1 bis 8,
**dadurch gekennzeichnet, dass** der Hochspannungs-Gleichstrombus (27) elektrisch mit der ersten Leitung (31) kommuniziert, indem er mit einem Hochspannungs-Wechselstrom-/HochspannungsGleichstrom-Wandler (29) verbunden ist, wobei der Hochspannungs-Wechselstrom-/Hochspannungs-Gleichstrom-Wandler (29) mit der ersten Leitung (31) verbunden ist.

10. Luftfahrzeug (1) mit einer Leistungsübertragungseinheit (60), die mit mindestens einem Auftrieb erzeugenden Rotor (7) verbunden und von mindestens einem Verbrennungsmotor (3) angetrieben ist, **dadurch gekennzeichnet, dass** das Luftfahrzeug (1) einen Aufbau (2) nach einem der Ansprüche 1 bis 9 aufweist.

11. Luftfahrzeug nach Anspruch 10,
**dadurch gekennzeichnet, dass** die Übertragungseinheit (60) ein Leistungsgetriebe (61) aufweiset, das von jedem Verbrennungsmotor (3) angetrieben wird, wobei die elektrische Sekundärmaschine (9) dazu bestimmt ist, mit dem Leistungsgetriebe (61) verbunden zu werden.

12. Luftfahrzeug nach einem der Ansprüche 10 bis 11,
**dadurch gekennzeichnet, dass** die Übertragungseinheit (60) ein Leistungsgetriebe (61) aufweist, das von jedem Verbrennungsmotor (3) angetrieben wird, wobei das Leistungsgetriebe (61) einen zusätzlichen Antriebsblock (62) antreibt, wobei die elektrische Sekundärmaschine (9) dazu bestimmt ist, mit dem zusätzlichen Antriebsblock (62) verbunden zu werden.

13. Luftfahrzeug nach einem der Ansprüche 10 bis 12,
**dadurch gekennzeichnet, dass** die Übertragungseinheit (60) ein Leistungsgetriebe (61) aufweist, das von jedem Verbrennungsmotor (3) angetrieben wird, wobei das Leistungsgetriebe (61) einen zusätzlichen Antriebsblock (62) antreibt, wobei der Aufbau (2) einen Hilfsmotor (70) aufweist, der den zusätzlichen Antriebsblock (62) antreibt.

14. Verfahren zur Verwendung eines Luftfahrzeugs nach einem der Ansprüche 10 bis 13,
**dadurch gekennzeichnet, dass**:
- während einer Startphase (STEP2) des Verbrennungsmotors (3), die ausgeführt wird während einer Betriebsphase am Boden, elektrische Energie von der Stromquelle (9, 17, 17', 23) entnommen wird und diese elektrische Energie dem elektrischen Hochspannungsnetz (100) zum Multifunktionswandler (16), einer zweiten Leitung (32) sowie der HochspannungsStromverteilerzentrale (10) zugeführt wird, wobei die elektrische Hauptmaschine (8) im Antriebsmodus arbeitet, um den Verbrennungsmotor zu starten,
- während eines Stromerzeugungsschritts (STEP3) elektrische Energie mit der elektrischen Hauptmaschine (8), die im Stromerzeugermodus arbeitet, erzeugt wird, und diese elektrische Energie an den Multifunktionswandler (16) nacheinander über eine Hochspannungs-Stromverteilerzentrale (10) und eine zweite Leitung (13) übertragen wird,
- während des Fluges und während einer Hybridphase (STEP4) elektrische Energie von der Stromquelle (9, 23) entnommen wird und diese elektrische Energie in dem elektrischen Hochspannungsnetz (100) dem Multifunktionswandler (16), einer zweiten Leitung (32) und dann der HochspannungsStromverteilerzentrale (10) zugeführt wird, wobei die elektrische Hauptmaschine (8) im Antriebsmodus arbeitet.

15. Elektrisches Verfahren nach Anspruch 14,
**dadurch gekennzeichnet, dass** während einer Betriebsphase am Boden (STEP1) der Stromquelle (17, 17', 23) elektrische Energie entnommen wird, und diese elektrische Energie in dem elektrischen Hochspannungsnetz (100) der elektrischen Sekundärmaschine (9) nacheinander über mindestens eine HochspannungsStromverteilerzentrale (10), eine erste Leitung (31), einen Multifunktionswandler (16), eine zweite Leitung (32) und dann über die Hochspannungs-Stromverteilerzentrale (10) zugeführt wird, wobei die elektrische Sekundärmaschine (9) im Antriebsmodus arbeitet, um mindestens teilweise die Übertragungseinheit (60) anzutreiben.

16. Elektrisches Verfahren nach einem der Ansprüche 14 bis 15, **dadurch gekennzeichnet, dass** während einer Betriebsphase am Boden (STEP1) der Stromquelle elektrische Energie entnommen wird und diese elektrische Energie dann einem Niederspannungsnetz (200) nacheinander über mindestens eine NiederspannungsStromverteilerzentrale (10), eine erste Leitung (31) und den Multifunktionswandler (16) zugeführt wird.

17. Verfahren nach einem der Ansprüche 14 bis 16,
**dadurch gekennzeichnet, dass** der Stromquelle elektrische Energie entnommen wird, indem die elektrische Energie über einen Überbrückungsstecker (17) entnommen wird, der mindestens eine Hochspannungs-Stromverteilerzentrale (10) speist.

18. Verfahren nach einem der Ansprüche 14 bis 17,
**dadurch gekennzeichnet, dass** der Stromquelle elektrische Energie entnommen wird, indem:
- eine zusätzliche Antriebsbox (62) der Leistungsübertragungseinheit (60) über einen Hilfsmotor (70) angetrieben wird,
- elektrische Energie ausgehend von einer elektrischen Sekundärmaschine (9), die mit dem zusätzlichen Antrieb (62) in Eingriff steht, erzeugt wird, um den Betrieb der elektrischen Sekundärmaschine (9) im Stromerzeugermodus zu fordern, wobei die elektrische Sekundärmaschine (9) die Stromquelle darstellt, die mindestens eine Hochspannungs-Stromverteilerzentrale (10) mit Strom versorgt.

19. Verfahren nach einem der Ansprüche 14 bis 18,
**dadurch gekennzeichnet, dass** der Stromquelle elektrische Energie entnommen wird, indem die elektrische Energie ausgehend von einer Niederspannungs-Stromquelle eines NiederspannungsStromnetzes (200) entnommen wird, und diese elektrische Energie dem Multifunktionswandler (16) zugeführt wird.

20. Verfahren nach Anspruch 19,
**dadurch gekennzeichnet, dass** die elektrische Energie dem Multifunktionswandler (16) über mindestens eine HochspannungsStromverteilerzentrale (10) und dann über eine erste Leitung (31) zugeführt wird.

21. Verfahren nach einem der Ansprüche 14 bis 20,
**dadurch gekennzeichnet, dass** mindestens eine elektrische Ausrüstung (14), die mit Hochspannungs-Wechselstrom arbeitet, über einen Multifunktionswandler (14) gespeist wird.

## Claims

1. Electrical architecture (2) for an aircraft (1) comprising a power transmission assembly (60) connected at least to one lift rotor (7) and driven by at least one heat engine (3), said electrical architecture (2) comprising a high-voltage electrical network (100) including a main electrical machine (8) intended to be connected to this heat engine (3) and a secondary electrical machine (9) intended to be connected to the power transmission assembly (60),
**characterised in that** said high-voltage electrical network (100) comprises at least one high-voltage electrical power centre (10) connected to at least one electrical source (9, 17, 17', 23), said high-voltage electrical power centre (10) being connected by a first line (31) and by a second line (32) to a multifunction converter (16), said high-voltage electrical power centre (10) comprising a first connection (91) connecting said first line (31) to said secondary electrical machine, said high-voltage electrical power centre (10) comprising a second connection (92) connecting said second line (32) to at least said main electrical machine (8) and said secondary electrical machine (9), said multifunction converter (16) comprising a high-voltage direct current bus (27) connected to a bidirectional inverter (28), said bidirectional inverter (28) being connected to the second line (32), said high-voltage direct current bus (27) communicating electrically with the first line (31), said multifunction converter (16) comprising a supervisor (26) connected to an avionics system (40) and to a control system (50) intended to control the heat engine (3) and to a controller (80) of the high-voltage electrical power centre (10) in order to electrically supply at least one electrical machine (8, 34, 9) and/or take electrical energy via the multifunction converter (16) from at least one of said electrical machines (8, 9) according to operating phases determined from said avionics system (40) and said control system (50).

2. Electrical architecture according to claim 1,
**characterised in that** said electrical source comprises a high-voltage ground connector (17) electrically supplying a high-voltage electrical power centre (10).

3. Electrical architecture according to any one of claims 1 to 2,
**characterised in that** said architecture (2) comprises at least one electric motor (34) electrically supplied by said second line (32) via said high-voltage electrical power centre (10).

4. Electrical architecture according to any one of claims 1 to 3,
**characterised in that** said architecture (2) comprises two heat engines (3), each heat engine (3) being connected to a said multifunction converter (16) by a high-voltage electrical power centre (10), said high-voltage electrical power centres (10) being connected to each other, at least one high-voltage electrical power centre (10) being connected to a high-voltage ground connector (17).

5. Electrical architecture according to any one of claims 1 to 4,
**characterised in that** said architecture (2) comprises at least one piece of electrical equipment (14) operating with a high-voltage alternating current connected to a high-voltage electrical power centre (10).

6. Electrical architecture according to any one of claims 1 to 5,
**characterised in that** said architecture (2) comprises a low-voltage electrical network (200) connected to each high-voltage electrical power centre (10) by a high-voltage alternating current/low-voltage direct current converter (11), said electrical source comprising at least one battery (23) connected to said high-voltage alternating current/low-voltage direct current converter (11) via a low-voltage electrical power centre (12).

7. Electrical architecture according to any one of claims 1 to 6,
**characterised in that** said architecture (2) comprises a low-voltage electrical network (200) connected to each high-voltage electrical power centre (10) by a high-voltage alternating current/low-voltage direct current converter (11), said electrical source comprising at least one low-voltage ground connector (17') connected to a low-voltage electrical power centre (12) of said low-voltage electrical network (200).

8. Electrical architecture according to any one of claims 1 to 7,
**characterised in that** said multifunction converter (16) comprises a high-voltage direct current/low-voltage direct current converter (30) connected to a low-voltage electrical network (200) and to said high-voltage direct current bus (27).

9. Electrical architecture according to any one of claims 1 to 8,
**characterised in that** said high-voltage direct current bus (27) communicating electrically with the first line (31) by being connected to a high-voltage alternating current/high-voltage direct current converter (29), this high-voltage alternating current/high-voltage direct current converter (29) being connected to the first line (31).

10. Aircraft (1) comprising a power transmission assembly (60) connected at least to one lift rotor (7) and driven by at least one heat engine (3),
**characterised in that** said aircraft (1) comprises an architecture (2) according to any one of claims 1 to 9.

11. Aircraft according to claim 10,
**characterised in that** said transmission assembly (60) comprising a power transmission gearbox (61) driven by each heat engine (3), said secondary electrical machine (9) is intended to be connected to said power transmission gearbox (61).

12. Aircraft according to any one of claims 10 to 11,
**characterised in that** said transmission assembly (60) comprising a power transmission gearbox (61) driven by each heat engine (3), said power transmission gearbox (61) driving an accessory gearbox (62), said secondary electrical machine (9) is intended to be connected to said accessory gearbox (62).

13. Aircraft according to any one of claims 10 to 12,
**characterised in that** said transmission assembly (60) comprising a power transmission gearbox (61) driven by each heat engine (3), said power transmission gearbox (61) driving an accessory gearbox (62), said architecture (2) comprises an auxiliary engine (70) driving said accessory gearbox (62).

14. Method of using an aircraft according to any one of claims 10 to 13,
**characterised in that**:
- during a step of starting (STEP2) said heat engine (3) performed during a phase of operation on the ground, electrical energy is taken from said electrical source (9, 17, 17', 23) and then this electrical energy is conveyed in said high-voltage electrical network (100) to said multifunction converter (16), a second line (32) and then said high-voltage electrical power centre (10), said main electrical machine (8) operating in motor mode in order to start said heat engine
- during a step of electrical generation (STEP3), electrical energy is generated with said main electrical machine (8) operating in electrical generator mode, and said electrical energy is transferred to said multifunction converter (16) successively via a high-voltage electrical power centre (10) and a second line (32),
- in flight and during a hybridisation phase (STEP4), electrical energy is taken from said electrical source (9, 23) and then this electrical energy is conveyed in said high-voltage electrical network (100) to said multifunction converter (16), a second line (32) and then said high-voltage electrical power centre (10), said main electrical machine (8) operating in motor mode.

15. Electrical method according to claim 14,
**characterised in that** during a phase of operating on the ground (STEP1), electrical energy is taken from said electrical source (17, 17', 23) and then this electrical energy is conveyed in said high-voltage electrical network (100) to said secondary electrical machine (9) successively via at least one high-voltage electrical power centre (10), a first line (31), a multifunction converter (16), a second line (32) and then said high-voltage electrical power centre (10), said secondary electrical machine (9) operating in motor mode in order to drive at least partially said transmission assembly (60).

16. Electrical method according to any one of claims 14 to 15,
**characterised in that** during a phase of operating on the ground (STEP1), electrical energy is taken from said electrical source and then this electrical energy is conveyed to a low-voltage electrical network (200) successively via at least one high-voltage electrical power centre (10), a first line (31) and said multifunction converter (16).

17. Method according to any one of claims 14 to 16,
**characterised in that** electrical energy is taken from said electrical source by taking electrical energy from a high-voltage ground connector (17) supplying at least one high-voltage electrical power centre (10).

18. Method according to any one of claims 14 to 17,
**characterised in that** electrical energy is taken from said electrical source by:
- driving an accessory gearbox (62) of said power transmission assembly (60) via an auxiliary engine (70),
- by generating electrical energy from a secondary electrical machine (9) engaged with said accessory gearbox (62) in order to require the operation of said secondary electrical machine (9) in electrical generator mode, said secondary electrical machine (9) representing said electrical source electrically supplying at least one high-voltage electrical power centre (10).

19. Method according to any one of claims 14 to 18,
**characterised in that** electrical energy is taken from said electrical source by taking electrical energy from a low-voltage electrical source of a low-voltage electrical network (200), and by transferring this electrical energy to said multifonction converter (16).

20. Method according to claim 19,
**characterised in that** said electrical energy is conveyed to a multifunction converter (16) via at least one high-voltage electrical power centre (10) and then a first line (31).

21. Method according to any one of claims 14 to 20,
**characterised in that** at least one piece of electrical equipment (14) operating with a high-voltage alternating current is supplied via a multifunction converter (14).
